# EUROPEAN PATENT SPECIFICATION

(11) **EP 4 222 425 B1**
(45) Date of publication and mention of the grant of the patent: **02.12.2026**
(21) Application number: 21876118.7
(22) Date of filing: 08.07.2021
(51) Int. Cl.: F24F 13/06, F24F 11/52

(54) **AN AIR PURIFIER COMPRISING A DIFFUSER**
LUFTREINIGER MIT EINEM DIFFUSOR
PURIFICATEUR D'AIR DOTÉ DE DIFFUSEUR

(30) Priority: 29.09.2020 TR 202015439
(43) Date of publication of application: 09.08.2023
(73) Proprietor: Arçelik Anonim Sirketi, 34445 Istanbul (TR)
(72) Inventor: YAVUZ KAYA, Pinar, 34445 Beyoglu/Istanbul (TR); TIRYAK , Mustafa, 34445 Beyoglu/Istanbul (TR); ERDOGAN, Koray, 34445 Beyoglu/Istanbul (TR); KAYA, Ünsal, 34445 Beyoglu/Istanbul (TR); SIVASLIOGLU, Sahin, 34445 Beyoglu/Istanbul (TR)
(86) International application number: PCT/TR2021/050699
(87) International publication number: WO 2022/071899

(56) References cited:
- CN-A- 102 319 534
- JP-A- 2009 106 874
- KR-B1- 101 914 156
- KR-B1- 102 088 698
- US-A- 5 788 847
- US-A1- 2012 043 283

## Description

The present invention relates to a device which cleans the air and which comprises a diffuser.

Today, the need for ventilation and the need for fresh air becomes more important in environments such as homes and offices especially in high-rise buildings. Plants can be a temporary solution for daytime but when the sunlight disappears, plants also start to produce carbon dioxide like human beings and the air quality of the environment decreases. Especially in high-rise buildings, it is not always possible to continuously keep the windows open and ventilate the environment. The continuously rising carbon dioxide amount in the air adversely affects human health. The amount of oxygen in a closed environment directly affects the metabolic rate of people and the lack thereof creates weakness and fatigue in humans. Ensuring that the amount of oxygen in the closed environment does not fall below a certain level while reducing the amount of carbon dioxide generated in the environment makes the human metabolism much more vivid and vigorous.

In most of the state of the art air purifiers, dust and bad odors in the air are trapped by HEPA, UV and other filters such that the cleaned air is released back into the room.

In air purifiers wherein the air in the environment is cleaned by adsorbing the carbon dioxide, it is important to adsorb the carbon dioxide at maximum efficiency.

In the state of the art United States of America Patent Application No. US2009045122A1, a water treatment system is disclosed, wherein a membrane-type diffuser is used.

In the state of the art United States of America Patent Application No. US2012043283A1, a wastewater treatment in a flue gas desulphurization apparatus used in a power plant is disclosed.

In the state of the Chinese Patent Application No. CN102319534A, an exhaust gas absorption treatment method is disclosed.

In the state of the art Japanese Patent Application No. JP2009106874A, a reaction tank and an air diffuser using an immersion type membrane module is disclosed.

The aim of the present invention is the realization of an air purifier wherein the air in the environment is cleaned by adsorbing the maximum amount of carbon dioxide from the air in the environment.

The air purifier of the present invention is defined in claim 1.

The air purifier of the present invention comprises a body; an air inlet which is provided on the body and which is used for sucking the air in the environment; a CO₂ adsorption unit into which the air sucked into the body is taken by means of an air duct and a pump and which is suitable for being supplied or filled with basic liquid solution; and a clean air outlet through which the clean air is released after the carbon dioxide in the air reacts with the basic liquid solution in the CO₂ adsorption unit so as to adsorb the carbon dioxide and convert the same to carbonate.

In the air purifier of the present invention, before pumping the air in the environment, the basic liquid solution may be filled into the CO₂ adsorption unit by the manufacturer beforehand or may be pumped from a basic solution supply unit by means of a supply line when the device is activated.

The air purifier of the present invention further comprises an acid supply unit. The carbonated solution formed in the CO₂ adsorption unit after the adsorption of carbon dioxide is neutralized in said acid supply unit.

In the air purifier of the present invention, at least one diffuser is disposed in the CO₂ adsorption unit. The diffuser has a cylindrical body and at least one opening provided on the cylindrical body. The dirty air in the environment is pumped into the cylindrical body of the diffuser by means of the air duct and the pump. The air passing through the cylindrical body passes through the opening on the diffuser so as to mix with the basic liquid solution in the CO₂ adsorption unit so as to create bubbles. Thus, the efficiency and rate of the reaction between the carbon dioxide and the basic liquid solution are increased such that the maximum amount of carbon dioxide is adsorbed from the dirty air in the environment.

A plurality of holes are arranged on the cylindrical body.

The hole and the opening jointly provide the passage of air into the CO₂ adsorption unit.

A membrane having a plurality of holes distributed on every section thereof is covered so as to completely enclose the cylindrical body.

In an embodiment of the present invention, the membrane and the cylindrical body are connected to each other by means of two clamps at two end portions.

A certain gap is provided between said membrane and the cylindrical body so as to allow the passage of air. The air exiting through the opening on the cylindrical body passes through the plurality of holes on the membrane and mixes with the basic liquid solution in the CO₂ adsorption unit due to pressure difference.

In an embodiment of the present invention, the cylindrical body comprises a plurality of openings which are distributed over the cylindrical body. In said embodiment, the opening serves as a hole which enables the air to be distributed into the CO₂ adsorption unit with bubbles.

By means of the present invention, an air purifier is realized, wherein when the basic liquid solution is supplied or filled into the CO₂ adsorption unit by the manufacturer before pumping the air in the environment, the basic liquid solution and the air are mixed so as to have bubbles in the CO₂ adsorption unit.

The model embodiments that relate to the air purifier realized in order to attain the aim of the present invention are illustrated in the attached figures, where:

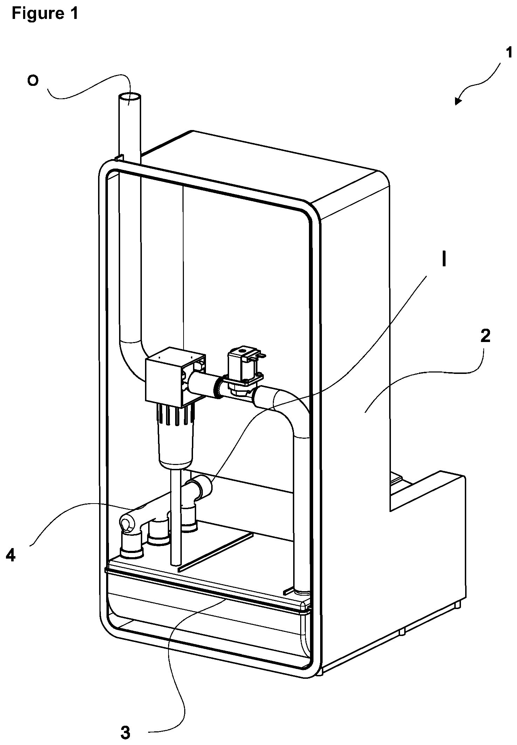

**Figure 1** **-** is the view of the air purifier wherein the CO₂ adsorption unit is horizontally positioned in the device in an embodiment of the present invention.

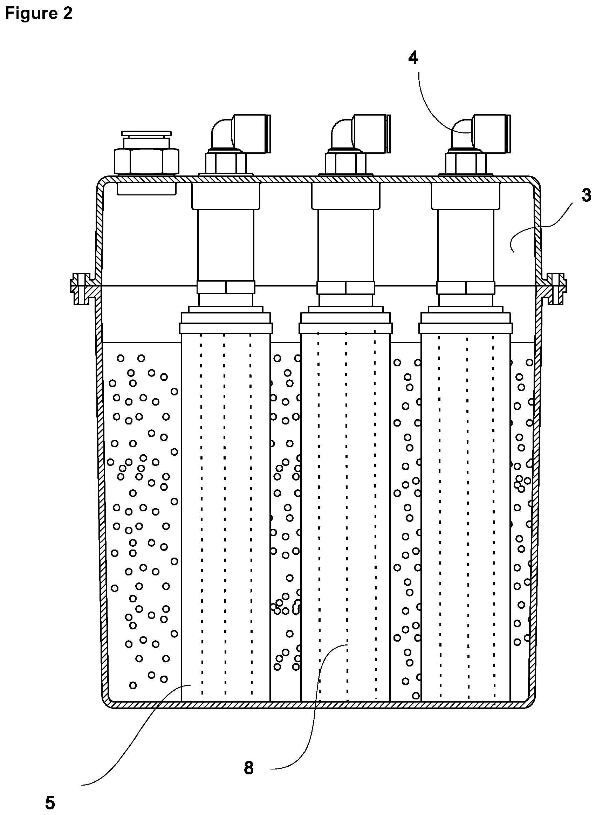

**Figure 2** **-** is the view of the diffusers and the inner side of the CO₂ adsorption unit wherein the CO₂ adsorption unit is vertically positioned in the air purifier in an embodiment of the present invention.

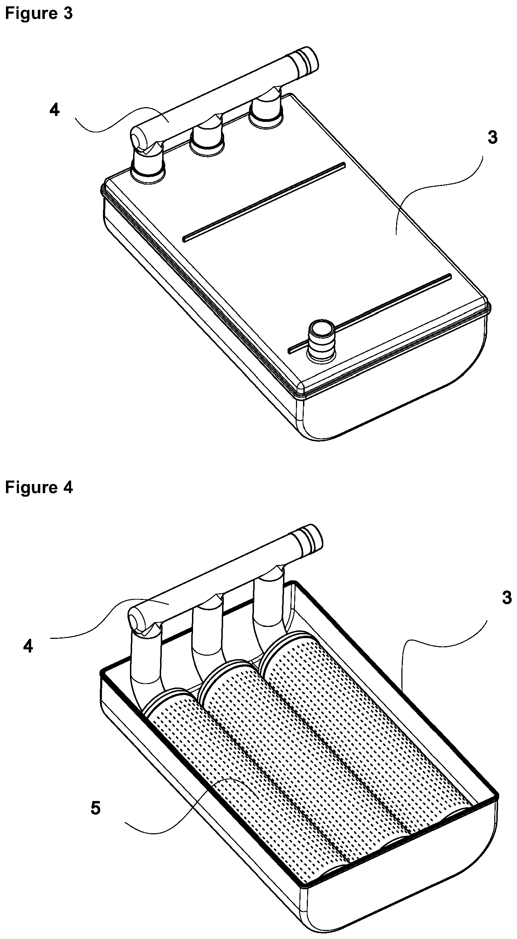

**Figure 3** **-** is the perspective view of the CO₂ adsorption unit in the air purifier in an embodiment of the present invention.
**Figure 4** **-** is the view of the CO₂ adsorption unit and the diffusers in the air purifier in an embodiment of the present invention.

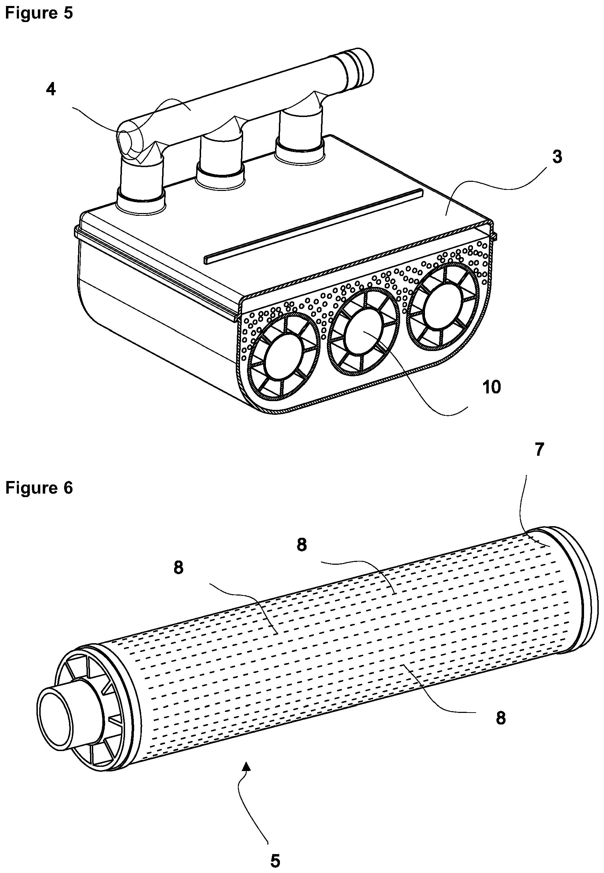

**Figure 5** **-** is the view of the inner side of the CO₂ adsorption unit after the basic liquid solution and the air are mixed in the air purifier of the present invention.
**Figure 6** **-** is the view of the diffuser in the air purifier in an embodiment of the present invention.

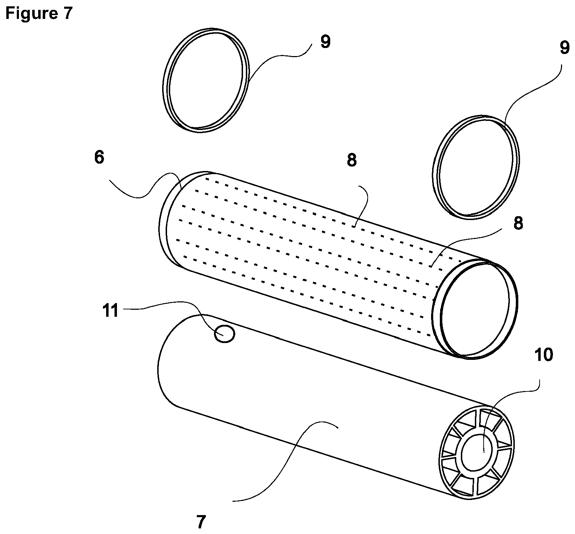

**Figure 7** **-** is the exploded view of the diffuser in the air purifier in an embodiment of the present invention.

The elements illustrated in the figures are numbered as follows:
1. Air purifier
2. Body
3. CO₂ adsorption unit
4. Air duct
5. Diffuser
6. Membrane
7. Cylindrical body
8. Hole
9. Clamp
10. Cover
11. Opening
I: Air inlet
O: Clean air outlet

The air purifier (1) comprises a body (2) having an air inlet (I) through which the air in the environment is sucked and a clean air outlet (O) through which the cleaned air is released to the environment; a CO₂ adsorption unit (3) which is provided on the body (2), which can be filled with basic liquid solution and which provides the adsorption of the carbon dioxide in the air; and an air duct (4) which provides the delivery of the air taken from the body (2) to the CO₂ adsorption unit (3).

The air purifier (1) of the present invention comprises a diffuser (5) having a cylindrical body (7) comprising at least one opening (11) thereon which allows the passage of the air into the CO₂ adsorption unit (3) such that the air is passed therethrough by means of the air duct so as to be mixed with the basic liquid solution in the CO₂ adsorption unit (3) in a manner to have bubbles.

In the air purifier (1) of the present invention, the air taken into the CO₂ adsorption unit (3) by means of the air duct (4) is passed through a diffuser (5) so as to be mixed with the basic liquid solution in the CO₂ adsorption unit (3) in a manner to form bubbles. The diffuser (5) comprises the cylindrical body (7) and at least one opening (11) which is provided on the cylindrical body (7) and which allows the passage of the air. The air passing through the opening (11) mixes with the basic liquid solution so as to form bubbles, ensuring that a higher amount of carbon dioxide is converted to carbonate compound as a result of the reaction. By means of the cylindrical body (7), the basic liquid solution and the air in the CO₂ adsorption unit are enabled to get in contact equally at every region thereof.

In the present invention, the air purifier (1) comprises the diffuser (5) having a membrane (6) which can be connected to the cylindrical body (7) so as to completely enclose the cylindrical body (7) through which the air passed and which comprises a plurality of holes (8) allowing the air passing through the opening (11) on the cylindrical body (7) to be pass into the CO₂ adsorption unit (3). In this embodiment, the air exiting the cylindrical body (7) through the opening (11) passes between the cylindrical body (7) and the membrane (6) having a high number of holes (8) so as to exit through the holes (8) at high pressure, thus forming much smaller air bubbles before being pumped into the CO₂ adsorption unit (3).

In the present invention, the air purifier (1) comprises the diffuser (5) having a membrane (6) wherein the diameter of the hole (8) is between 0.5 to 1.5 mm and each hole (8) has the same diameter. Thus, the bubbles in the CO₂ adsorption unit (3) have the desired dimensions for improved carbonation reaction efficiency.

In an embodiment of the present invention, the air purifier (1) comprises two clamps (9) which join the membrane (6) and the cylindrical body (7) at two end portions of the cylindrical body (7). Thus, the cylindrical body (7) and the membrane (6) are connected to each other such that a gap allowing the flow of air is left therebetween, and when the gap between the cylindrical body (7) and the membrane (6) connected to each other at two ends is filled with air, the air is enabled to exit through the holes (8) at a higher pressure. Thus, the number of air bubbles formed in the basic liquid solution is increased.

In an embodiment of the present invention, the air purifier (1) comprises the cylindrical body (7) having an opening with a diameter larger than that of the holes (8) on the membrane (6).

In an embodiment of the present invention, the air purifier (1) comprises the diffuser (5) having a cover (10) at the part of the cylindrical body (7) which is not connected to the air duct (4). Thus, the air delivered to the diffuser (5) through the air duct (4) is prevented from leaving the CO₂ adsorption unit (3) directly from the other end of the cylindrical body (7).

By means of the present invention, an air purifier (1) is realized, wherein the efficiency of the reaction between the carbon dioxide and the basic liquid solution is improved so as to adsorb a higher amount of carbon dioxide from the air in the environment.

## Claims

1. An air purifier (1) **comprising** a body (2) having an air inlet (I) through which the air in the environment is sucked and a clean air outlet (O) through which the cleaned air is released to the environment; a CO₂ adsorption unit (3) which is provided on the body (2), which is filled with basic liquid solution and which provides the adsorption of the carbon dioxide in the air; and an air duct (4) which provides the delivery of the air taken from the body (2) to the CO₂ adsorption unit (3), **characterized by** a diffuser (5) having a cylindrical body (7) comprising at least one opening (11) thereon which allows the passage of the air into the CO₂ adsorption unit (3) such that the air is passed therethrough by means of the air duct so as to be mixed with the basic liquid solution in the CO₂ adsorption unit (3) in a manner to have bubbles wherein the diffuser (5) having a membrane (6) which is connected to the cylindrical body (7) so as to completely enclose the cylindrical body (7) through which the air is passed and which comprises a plurality of holes (8) allowing the air passing through the opening (11) on the cylindrical body (7) to be pass into the CO2 adsorption unit (3), wherein the diameter of the holes (8) of the membrane (6) is between 0.5 to 1.5 mm and each hole (8) has the same diameter.

2. An air purifier (1) as in Claim 1, **characterized by** two clamps (9) which join the membrane (6) and the cylindrical body (7) at two end portions of the cylindrical body (7).

3. An air purifier (1) as in any one of the Claims 1 or 2, **characterized by** the cylindrical body (7) having an opening with a diameter larger than that of the holes (8) on the membrane (6).

4. An air purifier (1) as in any one of the above claims, **characterized by** the diffuser (5) having a cover (10) at the part of the cylindrical body (7) which is not connected to the air duct (4).

## Patentansprüche

1. Ein Luftreiniger (1) **umfasst** einen Körper (2) mit einem Lufteinlass (I), durch den die Umgebungsluft angesaugt wird, und einem Reinluftauslass (O), durch den die gereinigte Luft an die Umgebung abgegeben wird; eine CO₂-Adsorptionseinheit (3), die an dem Körper (2) vorgesehen ist, mit einer basischen Flüssigkeitslösung gefüllt ist und die Adsorption des Kohlendioxids in der Luft bewirkt; sowie einen Luftkanal (4), der die Zuführung der aus dem Körper (2) entnommenen Luft zur CO₂-Adsorptionseinheit (3) gewährleistet, **gekennzeichnet ist es dadurch**, dass ein Diffusor (5) mit einem zylindrischen Körper (7) vorgesehen ist, der mindestens eine Öffnung (11) , die den Durchfluss der Luft in die CO₂- Adsorptionseinheit (3) ermöglicht, sodass die Luft mittels des Luftkanals durch diese geleitet wird, um sich mit der basischen Flüssigkeitslösung in der CO₂- Adsorptionseinheit (3) in einer Weise zu vermischen, dass Blasen entstehen, wobei der Diffusor (5) eine Membran (6) aufweist, die mit dem zylindrischen Körper (7) verbunden ist, um den zylindrischen Körper (7) vollständig umschließt, durch den die Luft geleitet wird, und der eine Vielzahl von Löchern (8) aufweist, die es der durch die Öffnung (11) am zylindrischen Körper (7) strömenden Luft ermöglichen, in die CO₂-Adsorptionseinheit (3) zu gelangen, wobei der Durchmesser der Löcher (8) der Membran (6) zwischen 0,5 und 1,5 mm liegt und jedes Loch (8) denselben Durchmesser aufweist.

2. Ein Luftreiniger (1), wie in Anspruch 1 aufgeführt, **ist dadurch gekennzeichnet, dass** zwei Klemmen (9) die Membran (6) und den zylindrischen Körper (7) an zwei Endabschnitten des zylindrischen Körpers (7) verbinden.

3. Ein Luftreiniger (1), wie in Anspruch 1 oder 2 aufgeführt, **ist dadurch gekennzeichnet, dass** der zylindrische Körper (7) eine Öffnung aufweist, deren Durchmesser größer ist als der der Löcher (8) in der Membran (6).

4. Ein Luftreiniger (1), wie in einem der vorherigen Ansprüchen aufgeführt, **ist dadurch gekennzeichnet, dass** der Diffusor (5) an dem Teil des zylindrischen Körpers (7), der nicht mit dem Luftkanal (4) verbunden ist, eine Abdeckung (10) aufweist.

## Revendications

1. Purificateur d'air (1) **comprenant** un corps (2) comportant une entrée d'air (I) par laquelle l'air présent dans l'environnement est aspiré et une sortie d'air propre (O) par laquelle l'air purifié est rejeté dans l'environnement ; une unité d'adsorption du CO2 (3) qui est disposée sur le corps (2), qui est remplie d'une solution liquide basique et qui assure l'adsorption du dioxyde de carbone présent dans l'air ; et un conduit d'air (4) qui assure l'acheminement de l'air prélevé depuis le corps (2) vers l'unité d'adsorption du CO2 (3), **caractérisé par** un diffuseur (5) comportant un corps cylindrique (7) comprenant au moins une ouverture (11) permettant le passage de l'air dans l'unité d'adsorption du CO2 (3), de sorte que l'air y soit acheminé par l'intermédiaire du conduit d'air afin d'être mélangé à la solution liquide basique dans l'unité d'adsorption du CO2 (3) sous forme de bulles, le diffuseur (5) comportant une membrane (6) reliée au corps cylindrique (7) de manière à entourer complètement le corps cylindrique (7) à travers lequel l'air passe et comprenant une pluralité de trous (8) permettant à l'air passant par l'ouverture (11) du corps cylindrique (7) de pénétrer dans l'unité d'adsorption du CO2 (3), le diamètre des trous (8) de la membrane (6) étant compris entre 0,5 et 1,5 mm et chaque trou (8) présentant le même diamètre.

2. Purificateur d'air (1) selon la revendication 1, **caractérisé par** deux colliers de serrage (9) reliant la membrane (6) et le corps cylindrique (7) au niveau de deux parties d'extrémité du corps cylindrique (7).

3. Purificateur d'air (1) selon l'une quelconque des revendications 1 ou 2, **caractérisé par** le corps cylindrique (7) comportant une ouverture dont le diamètre est supérieur à celui des trous (8) de la membrane (6).

4. Purificateur d'air (1) selon l'une quelconque des revendications précédentes, **caractérisé par** le diffuseur (5) comportant un couvercle (10) au niveau de la partie du corps cylindrique (7) qui n'est pas reliée au conduit d'air (4).
